# EUROPEAN PATENT APPLICATION

(11) **EP 1 634 560 A1**
(43) Date of publication of application: **15.03.2006**
(21) Application number: 05012265.4
(22) Date of filing: 07.06.2005
(51) Int. Cl.: A61J 7/00, B65B 5/10, B65B 57/00

(54) **Tablet identification device of tablet automatic packaging machine**

(30) Priority: 08.09.2004 KR 2004071839
(71) Applicant: JVM Co., Ltd., Daegu 704-170 (KR)
(72) Inventor: Kim, Jun-ho 109-1602 Yongsan Lotte Castle Grand, Dalseo-Gu Daegu, 704-923 (KR)
(74) Representative: Grünecker, Kinkeldey, Stockmair & Schwanhäusser Anwaltssozietät

(57) **Abstract**

A tablet identification device of a tablet automatic packaging machine for recognizing information of tablets contained in tablet cassettes (100) disclosed. The tablet device includes a plurality of RF tags (400) and a plurality of tablet information access units (500). The RF tag (400) records information of tablets contained in a corresponding tablet cassette (100), and attached to one side of a cassette. The tablet information access unit (500) wirelessly receives the tablet information recorded in the RF tag and transmits the tablet information to a host computer or records new tablet information inputted from the host computer in the RF tag.

## Description

### BACKGROUND OF THE INVENTION

### Field of the Invention

The present invention relates to a tablet automatic packaging machine, and more particularly to a tablet identification device of a tablet automatic packaging machine for recognizing information of tablets contained in tablet cassettes.

### Description of the Related Art

Generally tablet automatic packaging machines include tablet cassettes based on kinds of tablets, and tablet feeders, each of which is coupled to a corresponding tablet cassette, allow the tablet feeders to selectively provide and package the corresponding tablets.

Such prior art tablet automatic packaging machines are disclosed in Japanese Patent Application NOS. 1994-208787 and 2001-89865, and Korean Utility Model Registration NO. 276236, etc.

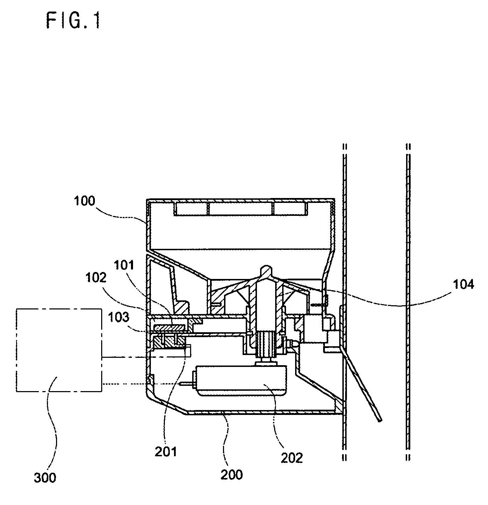

Configuration and operations of a tablet automatic packaging machine disclosed in Korean Utility Model Registration No. 276236 are described in detail below with reference to Fig. 1 illustrating.

First of all, the tablet automatic packaging machine is configured such that, a memory chip 101 recording information of tablets contained in each tablet cassette 100 is mounted on an adaptor 102 installed in the lower side of the tablet cassette 100, and protruded leads 103 of the adapter 102 are inserted to a socket 201 installed on the upper surface of a tablet feeder 200. Then, a microcomputer 300 connected to the socket 201 reads tablet information recorded in the memory chip 101 to recognize information of tablets contained in the tablet cassettes.

The prior art tablet automatic packaging machine discharges tablets as a rotor installed in the tablet cassette 100 is rotated when a motor located within the tablet feeder 200 is operated. However, the prior art machine has disadvantages in that the leads inserted into the socket 201 are separated or incompletely connected from or to the socket 201 due to vibration of the tablet cassette 100 generated when the machine operates, such that the tablet information cannot be normally read by the microcomputer.

Also, in the prior art tablet automatic packaging machine, the memory chip 101 in which tablet information is recorded must be operated by an additional writer to change its information or to add new information thereto. Namely, since the prior art tablet automatic packaging machine changes tablet information using an additional writer, it has drawbacks in that it is inconvenient to use and the additional writer must be managed.

### SUMMARY OF THE INVENTION

Therefore, the present invention has been made in view of the above problems, and it is an object of the present invention to provide a tablet identification device of a tablet automatic packaging machine which is capable of precisely recognizing information of tablets contained in tablet cassettes in a non-contact fashion, in order to remove errors generated by physical contact between a storing means storing tablet information and a means for accessing the storing means.

It is another object of the present invention to provide a tablet identification device of a tablet automatic packaging machine which is capable of precisely recognizing information of tablets contained in tablet cassettes in a non-contact fashion, and updating the tablet information.

In accordance with an aspect of the present invention, the above and other objects can be accomplished by the provision of a tablet identification device of a tablet automatic packaging machine comprising: A) a plurality of RF tags, each of which records information of tablets contained in a corresponding tablet cassette, in which each RF tag is attached to one side of each of a plurality of tablet cassettes; and B) a plurality of tablet information access units each of which wirelessly receives the tablet information recorded in the RF tag and transmits the tablet information to a host computer or records new tablet information inputted from the host computer in the RF tag. Here, the tablet information access unit includes: a) an antenna for transmitting/receiving wireless signals to/from the RF tag, in which the antenna is installed facing the RF tag; b) an RF module for modulating tablet information, which is required to be updated, to wireless signals to be outputted, and for demodulating the wireless signals received by the antenna to tablet information to be outputted; c) a control unit for controlling transmission of tablet information required to be updated by the host computer to the RF module, and for controlling transmission of the tablet information demodulated in the RF module to the host computer; and d) an interface unit for interfacing the control unit with the host computer.

Preferably, the tablet information access unit may further include: a tablet discharge sensor for sensing whether tablets contained in the tablet cassette are discharged or not and outputting the sensing signal to the control unit; and a motor driving unit for driving a motor according to control of the control unit, in which the motor rotates a rotor in the tablet cassette.

Preferably, the tablet information access unit may be installed in each of a plurality of tablet feeders.

Therefore, the tablet identification device of a tablet automatic packaging machine according to the present invention utilizes an RF tag and a tablet information access unit for transmitting/receiving tablet information to/from the RF tag in a wireless fashion, and thus is not affected by errors generated by physical contact between a storing means storing tablet information and a means for accessing the storing means.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a view describing operations of a prior art tablet identification device of a tablet automatic packaging machine;
Fig. 2 is a schematic block diagram of a tablet identification device of a tablet automatic packaging machine according to an embodiment of the present invention; and
Fig. 3 is an exploded cross-sectional view describing positions of elements located at a tablet identification device of a tablet automatic packaging machine according to an embodiment of the present invention.

### DESCRIPTION OF THE PREFERRED EMBODIMENTS

With reference to the attached drawings, the preferred embodiment of the present invention is described in detail below, such that persons skilled in the art can easily understand and reproduce the embodiments.

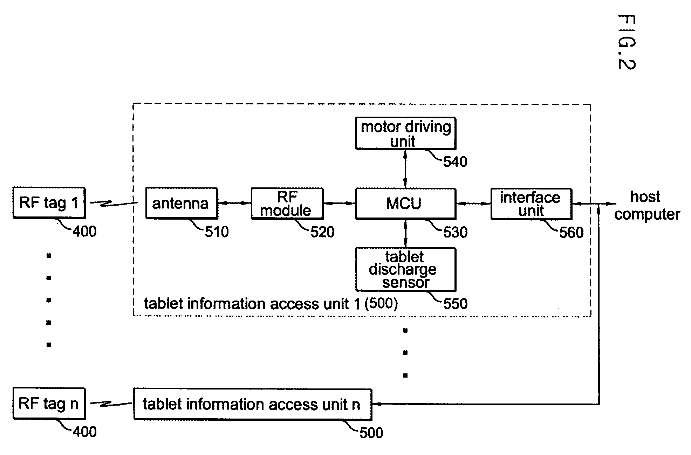

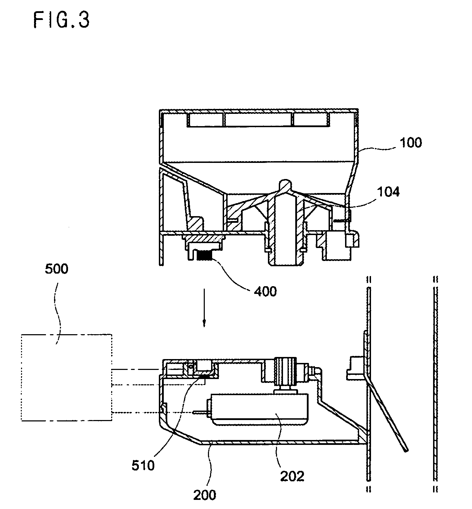

Fig. 2 is a schematic block diagram of a tablet identification device of a tablet automatic packaging machine according to an embodiment of the present invention, and Fig. 3 is an exploded cross-sectional view describing positions of elements located at a tablet identification device of a tablet automatic packaging machine according to an embodiment of the present invention.

As shown in Fig. 2, the tablet identification device according to the embodiment of the present invention includes a plurality of RF tags 400 and a plurality of tablet information access units 500 respectively corresponding to the plurality of RF tags 400.

Each of the RF tags 400 is attached to one side of each tablet cassette. More specifically, as shown in Fig. 3, each RF tag 400 is attached to the lower end of each tablet cassette 100 to be mounted on the tablet feeder 200, such that the RF tag 400 can record information of tablets contained in a corresponding tablet cassette 100. Here, the RF tag 400 uses a frequency band (13.56MHz), which is the same as that of a smart card, and can perform reading and writing operations. The RF tag 400 has a memory in which tablet information, such as tablet name and tablet weight, is recorded.

On the other hand, the plurality of tablet information access units 500, which are respectively assigned by addresses, wirelessly input tablet information recorded in the RF tags 400, respectively, to transmit it to a host computer. Also, the tablet information access units 500 record new tablet information inputted from the host computer in the RF tags 400. Each of the tablet information access units 500 is implemented with a printed circuit board (PCB) on which electric parts are aggregated and electrically connected to each other. Here, the PCB is mounted within the tablet feeder 200, as shown in Fig. 3.

The tablet information access unit 500 includes an antenna 510 transmitting/receiving wireless signals to/from the RF tag 400, in which the antenna 510 is installed facing the RF tag 400 which is attached to a tablet cassette 100 mounted on a tablet feeder 200, an RF module 520 for modulating tablet information, which is required to be updated by the host computer, to wireless signals to be outputted, and for demodulating the wireless signals received by the antenna to tablet information to be inputted, an MCU 530 for controlling transmission of tablet information required to be updated by the host computer to the RF module 520, and for controlling transmission of the tablet information demodulated in the RF module 52 to the host computer, and an interface unit 560 for interfacing information between the MCU 530 and the host computer with each other.

According to another embodiment of the present invention, the tablet information access unit 500 can further include a tablet discharge sensor 550 for sensing whether tablets contained in the tablet cassette 100 are discharged or not and outputting sensor signal to the MCU 530. Such a tablet discharge sensor 550 may be implemented with a sensor including an infrared light emission unit and a phototransistor.

In addition, the tablet information access unit 500 may further include a motor driving unit 540 for driving a motor 202 according to control of the MCU 530, in which the motor 202 rotates a rotor which discharges the tablets contained in the tablet cassette 100 one by one to the outside.

Operations of the tablet identification device configured as such are described in detail below.

Firstly, as shown in Fig. 3, when a tablet cassette 100 is to contain tablets, such as headache medication, tablet information, such as name of the headache specific, quantity of tablets, etc., must be previously registered in an RF tag 400 attached to a corresponding tablet cassette 100.

As such, in order to register tablet information in the RF tag 400, an administrator places the tablet cassette 100 on the tablet feeder 200. After that, identification information of the tablet information access unit 500 and tablet information are inputted thereto through the host computer. Here, the identification information of the tablet information access unit 500 is an address of the tablet information access unit 500 to designate the tablet cassette 100 or the tablet information access unit 500 corresponding to the tablet cassette 100.

As such, when the administrator inputs the identification information of the tablet information access unit 500 and the tablet information thereto, the MCU 530 receiving the inputted identification information of the tablet information access unit 500 transmits the tablet information inputted from the host computer to the RF module 520, such that corresponding tablet information is wirelessly modulated to be transmitted to the RF tag 400 through the antenna 510.

Accordingly, the memory controller in the RF tag 400 registers the received tablet information in a memory, such that tablet information can be recorded in the RF tag 400.

On the other hand, when the tablet cassette 100 to which the RF tag 400 is attached is mounted on the tablet feeder 200, as shown in Fig. 3, in which tablet information is recorded in the RF tag 400, the RF tag 400 responds to wireless signals transmitted from an antenna 510 located at the tablet feeder 200, and modulates tablet information recorded in the memory to a wireless signal to be transmitted.

The wireless signals for the tablet information transmitted from the RF tag 400 are received by an antenna 510 located at a position facing thereto and are applied to the RF module 520. The RF module 520 demodulates the received signals to the original tablet information before performing modulation and then transmits the tablet information to the MCU 530.

Accordingly, the MCU 530 can record information of tablets contained in the tablet cassette 100 mounted on the tablet feeder 200. If the host computer issues a transmission request for the recorded tablet information of the MCU 530, the MCU 530 transmits address information, i.e., the identification information of the tablet information access unit 500 and tablet information, to the host computer.

The host computer registers information of tablets contained in the tablet cassette 100 mounted on the tablet feeder 200 and its position in the memory, such that discharge of tablets to be packaged can be requested to a corresponding tablet information access unit 500 or an additional driving unit related to tablet discharge based on information of a later prescription.

Then the MCU 530 of the tablet information access unit 500, having been requested to discharge tablets, controls a motor driving unit 540 to drive a motor, such that one or two tablets are discharged from the tablet cassette 100 and are then conveyed to a tablet package deposit. Here, the tablet discharge sensor 550 senses tablet discharge. Therefore, the tablets are automatically packaged according to the prescription.

Accordingly, since the identification device according to the present invention wirelessly receives tablet information from the RF tag 400 including tablet information which is attached to the tablet cassette 100, it can basically remove errors generated by physical contact between the storing means storing tablet information and a means for accessing the storing means.

As mentioned above, the tablet identification device of the present invention has advantages in that, since it receives wireless signals for tablet information from a means storing the tablet information, it can precisely receive the tablet information without error, compared with the prior art tablet identification device that receives tablet information in a physical contact fashion.

Also, the tablet identification device of the present invention has advantages in that, since it does not require additional devices, such as an information writer, previously stored tablet information can be easily updated.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A tablet identification device of a tablet automatic packaging machine comprising:
A) a plurality of RF tags, each of which records information of tablets contained in a corresponding tablet cassette, in which each RF tag is attached to one side of each of a plurality of tablet cassettes; and
B) a plurality of tablet information access units each of which wirelessly receives the tablet information recorded in the RF tag and transmits the tablet information to a host computer or records new tablet information inputted from the host computer in the RF tag, wherein the tablet information access unit includes:
a) an antenna for transmitting/receiving wireless signals to/from the RF tag, in which the antenna is installed facing the RF tag;
b) an RF module for modulating tablet information, which is required to be updated, to wireless signals to be outputted, and for demodulating the wireless signals received by the antenna to tablet information to be outputted;
c) a control unit for controlling transmission of tablet information required to be updated by the host computer to the RF module, and for controlling transmission of the tablet information demodulated in the RF module to the host computer; and
d) an interface unit for interfacing the control unit with the host computer.

2. The device as set forth in claim 1, wherein the tablet information access unit further includes:
a tablet discharge sensor for sensing whether tablets contained in the tablet cassette are discharged or not and outputting the sensing signal to the control unit; and
a motor driving unit for driving a motor according to control of the control unit, in which the motor rotates a rotating member in the tablet cassette.

3. The device as set forth in claim 1 or 2, wherein the tablet information access unit is installed in each of a plurality of tablet feeders.
